(19) Europäisches Patentamt
European Patent Office
Office européen des brevets

(11) **EP 4 184 125 B1**

(12) **FASCICULE DE BREVET EUROPEEN**

(45) Date de publication et mention
de la délivrance du brevet:
**01.05.2024   Bulletin 2024/18**

(21) Numéro de dépôt: **22208858.5**

(22) Date de dépôt: **22.11.2022**

(51) Classification Internationale des Brevets (IPC):
**G01D 21/00** (2006.01)     **H01Q 15/14** (2006.01)
**G06K 19/07** (2006.01)     **G06K 19/077** (2006.01)
**H01Q 9/04** (2006.01)

(52) Classification Coopérative des Brevets (CPC):
**G01D 21/00; G06K 19/0717; G06K 19/07773;
G06K 19/07786; H01Q 9/0407; H01Q 15/141**

(54) **DISPOSITIF DE MESURE D'AU MOINS UNE GRANDEUR PHYSIQUE ET PROCÉDÉ DE DÉTERMINATION ASSOCIÉ**

VORRICHTUNG ZUR MESSUNG MINDESTENS EINER PHYSIKALISCHEN GRÖSSE UND VERFAHREN ZUR BESTIMMUNG DAVON

DEVICE FOR MEASURING AT LEAST ONE PHYSICAL VARIABLE AND ASSOCIATED DETERMINATION METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **23.11.2021   FR 2112383**

(43) Date de publication de la demande:
**24.05.2023   Bulletin 2023/21**

(73) Titulaires:
• **Commissariat à l'énergie atomique
et aux énergies alternatives
75015 Paris (FR)**
• **Centre National de la Recherche Scientifique
75016 Paris (FR)**

(72) Inventeurs:
• **FONSECA-DIAS, Luis-Felipe
38054 GRENOBLE CEDEX 9 (FR)**
• **JOUVAUD, Camille
38054 GRENOBLE CEDEX 9 (FR)**
• **DELAVEAUD, Christophe
38054 GRENOBLE CEDEX 9 (FR)**
• **AUBERT, Hervé
31000 TOULOUSE (FR)**

(74) Mandataire: **Lavoix
2, place d'Estienne d'Orves
75441 Paris Cedex 09 (FR)**

• **NUMAN AHMED BILAL ET AL: "Wide Field of View Retrodirective Millimeter Wave Antenna Array With Pulse Modulation and Orthogonal Polarization States", IEEE ACCESS, IEEE, USA, vol. 8, 9 décembre 2020 (2020-12-09), pages 221127-221137, XP011825939, DOI: 10.1109/ACCESS.2020.3043525**
• **CHEN YI ET AL: "Circularly Polarized UHF RFID Tag Antenna for Wireless Sensing of Complex Permittivity of Liquids", IEEE SENSORS JOURNAL, IEEE, USA, vol. 21, no. 23, 21 octobre 2021 (2021-10-21), pages 26746-26754, XP011890764, ISSN: 1530-437X, DOI: 10.1109/JSEN.2021.3121714 [extrait le 2021-11-29]**
• **YANG SHIH-AN ET AL: "Polarization-reconfigurable slot loop antenna based on a novel varactor-loaded feeding network", 2016 IEEE INTERNATIONAL SYMPOSIUM ON RADIO-FREQUENCY INTEGRATION TECHNOLOGY (RFIT), IEEE, 24 août 2016 (2016-08-24), pages 1-3, XP032971202, DOI: 10.1109/RFIT.2016.7578170**
• **JEANTY ROBIN ET AL: "A low-profile polarization-reconfigurable cavity antenna based on partially reflective surface", 2017 IEEE INTERNATIONAL SYMPOSIUM ON RADIO-FREQUENCY INTEGRATION TECHNOLOGY (RFIT), IEEE, 30 août 2017 (2017-08-30), pages 226-228, XP033155198, DOI: 10.1109/RFIT.2017.8048258**

(56) Documents cités:
**WO-A1-2010/136388     CN-A- 111 797 963**

**Description**

La présente invention concerne un dispositif de mesure d'au moins une grandeur physique, le dispositif de mesure comprenant au moins une unité d'émission-réception d'ondes électromagnétiques, et une antenne-capteur formée d'un capteur intégré à une antenne cible présentant au moins un port d'excitation, l'antenne-capteur présentant une impédance variable à transduction électromagnétique.

L'invention concerne également un procédé de détermination de la plage de variation de l'impédance de charge du capteur de l'antenne-capteur du dispositif de mesure précité et de détermination de la polarisation du champ incident de l'unité d'émission-réception lors de l'émission d'onde.

L'invention se situe dans le domaine de la mesure d'une grandeur physique, telle que la température, la pression, la concentration en gaz, l'humidité, etc. au moyen de capteurs propres à équiper des objets, des lieux et des environnements physiques notamment dans un contexte global d'internet des objets (IoT de l'anglais *Internet of Things*).

En particulier, la présente invention porte sur l'interrogation sans fil utilisée pour mesurer la réponse électromagnétique d'un capteur intégré à une antenne cible, l'ensemble formé de l'antenne cible et du capteur étant appelé par la suite antenne-capteur.

Les solutions actuelles de conception d'antenne-capteur à des fins de mesure de grandeurs physiques sont généralement basées sur la mesure en polarisation linéaire de l'amplitude du champ électromagnétique rétrodiffusé par l'antenne cible, en utilisant par exemple la mesure de l'amplitude de la surface équivalente radar (SER), tel que notamment divulgué au sein du document WO 2010/136388 A1 à une fréquence donnée, et/ou en utilisant la variation fréquentielle du maxima (i.e. pic) ou du minima de cette surface équivalente radar (SER), ou encore en mesurant l'amplitude de la composante en polarisation croisée du champ rétrodiffusé, combinée le cas échéant avec des techniques de lecture radar.

CN 111 797 963 A divulgue une antenne-capteur passive fonctionnant selon la technologie RFID et interrogée par un interrogateur RFID, l'antenne-capteur comprenant une antenne, une puce RFID et un capteur ayant une impédance variable (e.g. résistance dépendant de la température mesurée; ou capacitance pour la détection de gaz). L'antenne-capteur, quand interrogée, renvoie un signal codé.

WO 2010/136388 A divulgue similairement une antenne-capteur autonome comprenant une antenne et un capteur dont l'impédance est variable pour la détection d'une grandeur physique. L'antenne-capteur, quand interrogée par un dispositif interrogateur, renvoie un signal dont l'amplitude et la fréquence représentent la valeur mesurée de la grandeur physique.

Numan A.B. et Al: "Wide Field of View Retrodirective Millimeter Wave Antenna Array With Pulse Modulation and Orthogonal Polarization States", IEEE Access, Vol. 8. 2020, divulgue un ensemble d'antennes pour des étiquettes comprenant des capteurs, et enseigne que les antennes changent la polarisation entre le signal reçu et le signal rétrodiffusé, dans le but de discriminer plus facilement le signal réfléchi par une antenne des autres signaux rétrodiffusés dans l'environnement de l'antenne.

Chen Y. et Al.: "Circularly Polarized UHF RFID Tag Antenna for Wireless Sensing of Complex Permittivity of Liquids", IEEE Sensors Journal, 21.10.2021, divulgue une antenne-capteur pour la mesure de la permittivité diélectrique d'un liquide injecté dans une structure de l'antenne. YANG SHIH-AN ET AL: "Polarization-reconfigurable slot loop antenna based on a novel varactor-loaded feeding network", 2016 IEEE International Symposium on Radio-Frequency Intégration Technology (RFIT) 2016, IEEE, de même que Jeanty R. et Al.: "A low-profile polarization-reconfigurable cavity antenna based on partially reflective surface", 2017 IEEE International Symposium on Radio-Frequency Intégration Technology (RFIT), 2017, enseignent que la polarisation, en lien avec l'angle d'interrogation de l'antenne, est un paramètre essentiel des antennes et est considéré généralement pour s'assurer une moindre perte dans le transfert d'énergie et donc un signal rétrodiffusé suffisamment fort.

Toutefois, les solutions actuelles de l'état de la technique de mesure de grandeur physique utilisant une ou plusieurs antenne-capteur(s) n'exploitent pas de manière optimale la phase du champ rétrodiffusé et/ou sont généralement basées sur une interrogation en polarisation constante (i.e. fixe, notamment une polarisation linéaire en émission comme en réception, ou encore une polarisation circulaire en émission comme en réception), ce qui limite les performances des mesures actuelles.

L'invention a pour objet de remédier aux inconvénients de l'état de la technique en proposant un dispositif de mesure d'au moins une grandeur physique à base d'antenne capteur permettant une meilleure exploitation du champ rétrodiffusé par une antenne-capteur.

A cet effet, l'invention propose un dispositif de mesure d'au moins une grandeur physique, le dispositif de mesure comprenant au moins :

- une unité d'émission-réception d'ondes électromagnétiques,
- une antenne-capteur formée d'un capteur intégré à une antenne cible présentant au moins un port d'excitation, l'antenne-capteur présentant une impédance variable à transduction électromagnétique,

le dispositif de mesure étant configuré, par bande de fréquences prédéterminée et indépendamment de l'écart angulaire entre l'émission et la réception d'ondes, pour mesurer la réponse électromagnétique de l'antenne-capteur au moins à partir d'un taux d'ellipticité d'un champ électromagnétique rétrodiffusé par ladite antenne-capteur, le taux d'ellipticité caractérisant la polarisation du champ électromagnétique propre à être mesuré par l'unité d'émission-réception, ladite réponse électromagnétique étant représentative, par transduction électromagnétique, de ladite au moins une grandeur physique à mesurer.

Avantageusement, le dispositif de mesure proposé selon la présente invention permet à partir du taux d'ellipticité du champ électromagnétique rétrodiffusé par ladite antenne-capteur de quantifier la polarisation du champ électromagnétique de l'antenne-capteur. Le taux d'ellipticité permet en particulier d'identifier la forme géométrique décrite par le vecteur champ électrique sur une surface normale à la direction de propagation de l'onde, et en conséquence sa polarisation, la plage de valeurs du taux d'ellipticité variant de un à l'infini en linéaire (soit de 0 dB à l'infini), respectivement pour les polarisations circulaire et linéaire.

Suivant d'autres aspects avantageux de l'invention, le dispositif de mesure comporte une ou plusieurs des caractéristiques suivantes, prises isolément ou suivant toutes les combinaisons techniquement possibles :

- le dispositif de mesure est configuré pour présenter, par bande de fréquences prédéterminée, une relation bijective entre l'impédance de charge du capteur et le taux d'ellipticité du champ électromagnétique propre à être rétrodiffusé par ladite antenne-capteur ;
- l'impédance de charge est passive ;
- ladite antenne-capteur est une antenne de radio-identification associée à une puce électronique propre à contrôler ladite impédance de charge, en particulier pour une application RFID (de l'anglais *Radio Frequency IDentification*) ladite antenne-capteur est libellée « tag » ou encore balise d'identification ;
- ladite antenne-capteur est une antenne-capteur active ;
- le fonctionnement du capteur dépend d'une source d'énergie locale constante, correspondant par exemple à une pile, une batterie ou encore le secteur auquel le capteur est connecté, et le capteur est adaptable pour notamment correspondre à des capteurs connus du commerce, tel que par exemple le capteur de température LMT70 produit par Texas Instruments ;
- le capteur est configuré pour intégrer un outil de prétraitement et/ou d'amplification d'un signal fourni par une source d'énergie locale, un tel outil correspondant par exemple à un amplificateur de puissance et/ou à un circuit de conditionnement dudit signal et /ou à un microcontrôleur, et/ou à un filtre, et/ou à un module propre à appliquer une transduction supplémentaire au signal fourni, un tel capteur enrichi d'un outil de prétraitement et/ou d'amplification correspondant alors à un système électronique ;
- ladite antenne-capteur est en outre configurée pour optimiser l'amplitude et/ou la phase du champ électromagnétique rétrodiffusé, par contrôle du taux d'ellipticité du champ électromagnétique rétrodiffusé, au moyen de l'impédance de charge du capteur de l'antenne-capteur ;
- ladite antenne-capteur est configurée pour contrôler ledit taux d'ellipticité, au moyen de l'impédance de charge du capteur, ladite impédance de charge du capteur étant propre à faire varier directement le mode antennaire de l'antenne-capteur, la valeur de ladite impédance de charge du capteur étant propre à être réglée en tenant compte du mode structure de l'antenne-capteur, ledit mode structure étant déterminé par caractérisation du champ électromagnétique rétrodiffusé associé, une telle caractérisation étant notamment, comme décrit plus en détail par la suite, obtenue au moyen d'un court-circuit chargeant l'antenne-capteur, le mode structure de l'antenne-capteur étant propre à être selon un cas extrême quasi-nul voire nul ce qui revient alors à ne « manipuler » que les composantes orthogonales du mode antenne de l'antenne-capteur et ses rapports d'amplitude et phase ;
- ladite antenne-capteur est formée d'un capteur intégré à une antenne cible présentant au moins deux ports d'excitation, ladite antenne-capteur étant configurée pour contrôler ledit taux d'ellipticité, au moyen de l'impédance de charge du capteur, ladite impédance de charge du capteur étant propre à faire varier directement les composantes orthogonales du mode antennaire de l'antenne-capteur, la valeur de ladite impédance de charge du capteur étant propre à être réglée en tenant compte du mode structure de l'antenne-capteur, ledit mode structure étant déterminé par caractérisation du champ électromagnétique rétrodiffusé associé ; une telle caractérisation étant notamment, comme décrit plus en détail par la suite, obtenue au moyen d'un court-circuit chargeant l'antenne-capteur.

Selon un autre aspect, l'invention concerne également un procédé de détermination de la plage de variation de l'impédance de charge du capteur de l'antenne-capteur du dispositif de mesure précité et de détermination de la polarisation d'incidence de l'unité d'émission-réception lors de l'émission d'onde, le procédé comprenant les étapes suivantes, par bande de fréquences prédéterminée :

- caractérisation du modèle de rétrodiffusion de ladite antenne-capteur pour une direction d'incidence et une direction de retransmission prédéterminées et pour une pluralité prédéterminée de polarisations d'onde plane incidente émise par l'unité d'émission-réception,

- première détermination de la réactance et/ou de la résistance de l'impédance de charge du capteur de l'antenne-capteur associée à une première valeur d'amplitude et/ou de taux d'ellipticité prédéterminée du champ rétrodiffusé associé audit modèle de rétrodiffusion en fonction de la polarisation d'onde plane incidente,
- deuxième détermination de la réactance et/ou de la résistance de l'impédance de charge du capteur associé à une deuxième valeur d'amplitude et/ou de taux de d'ellipticité prédéterminé du champ rétrodiffusé associé audit modèle de rétrodiffusion en fonction de la polarisation d'onde plane incidente,
- troisième détermination de la polarisation d'incidence à partir de la première détermination et à partir de la deuxième détermination

Selon un cas particulier dudit procédé :

- l'étape de caractérisation est mise en oeuvre pour une pluralité prédéterminée de polarisations linéaires d'onde plane incidente émise par l'unité d'émission-réception ;
- l'étape de première détermination correspond à la détermination de la réactance de l'impédance de charge du capteur de l'antenne-capteur maximisant la valeur du champ rétrodiffusé associé audit modèle de rétrodiffusion ; et
- l'étape de troisième détermination correspond à la détermination de la polarisation d'incidence correspondant à la fois à une charge prédéterminée et à la réactance de l'impédance de charge du capteur de l'antenne-capteur maximisant la valeur du champ rétrodiffusé associé audit modèle de rétrodiffusion, et obtention de la valeur de résistance maximale de l'impédance de charge du capteur associée à une rétrodiffusion en polarisation circulaire, ladite plage de variation de l'impédance de charge du capteur de l'antenne-capteur correspondant à une plage de variation de la résistance de l'impédance de charge du capteur entre la valeur zéro, associée à un taux d'ellipticité maximal, et ladite valeur de résistance maximale, associée à une valeur nulle du taux d'ellipticité, pour une valeur de réactance constante égale à la réactance de l'impédance de charge du capteur de l'antenne-capteur maximisant la valeur du champ rétrodiffusé associé audit modèle de rétrodiffusion.

Selon un cas particulier complémentaire optionnel dudit procédé, ladite étape de caractérisation du modèle de rétrodiffusion de ladite antenne-capteur comprend :

- l'excitation locale de l'antenne de ladite antenne-capteur et :

  + la mesure des composantes orthogonales de son champ rayonné, ladite mesure des composantes orthogonales correspondant à la mesure de deux cas distincts orthogonaux de l'onde incidente propres à permettre de caractériser le mode structure associé, notamment une mesure en incidence verticale et une mesure en incidence horizontale, ce qui permet de définir l'ensemble du plan d'incidence complété ensuite par un post-traitement numérique en complément des deux incidences orthogonales associées aux deux mesures précitées, une pluralité de polarisations d'incidences prédéterminées ;
  + en fonction du nombre de port(s) d'excitation de ladite antenne cible, le calcul d'au moins une impédance au niveau d'une interface entre ladite antenne et une impédance de charge de ladite antenne, de valeur prédéterminée ;

- la détermination du mode structure de l'antenne de ladite antenne-capteur par chargement de ladite antenne par un court-circuit et illumination par une onde incidente prédéterminée.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 illustre schématiquement le dispositif de mesure d'au moins une grandeur physique selon un mode de réalisation de l'invention ;
[Fig 2] la figure 2 illustre un exemple d'antenne cible dudit dispositif de mesure; et
[Fig 3] la figure 3 illustre schématiquement un cas particulier du procédé de détermination de la plage de variation de l'impédance de charge du capteur de l'antenne-capteur du dispositif de mesure selon la présente invention, et de la polarisation d'incidence.

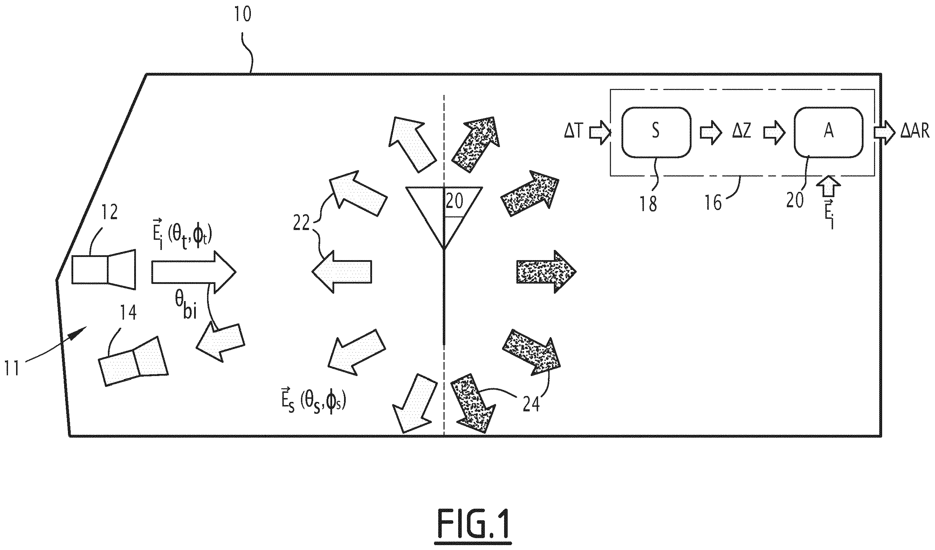

La figure 1 illustre tout d'abord schématiquement le principe de fonctionnement d'un dispositif 10 de mesure selon la présente invention. Un tel dispositif 10 de mesure correspond à un système d'interrogation sans fil, utilisé afin de mesurer une grandeur physique, telle que la température, la pression, la concentration en gaz, l'humidité, etc.
Pour ce faire, le dispositif 10 de mesure selon la présente invention comprend une unité 11 d'émission-réception d'ondes électromagnétiques, comportant par exemple une antenne d'émission 12, une antenne de réception 14. Le dispositif de mesure 10 comprend une antenne-capteur 16 formée d'un capteur 18 intégré à une antenne cible 20 présentant au moins un port d'excitation, l'antenne-capteur 16 présentant une impédance variable à transduction électromagnétique.

En particulier, pour une application RFID (de l'anglais *Radio Frequency Identification*) ladite antenne-capteur 16 est libellée « tag » ou encore étiquette d'identification.

Le dispositif 10 de mesure est configuré pour mesurer la réponse électromagnétique du capteur 18 intégré à l'antenne cible 20, d'où le terme « antenne-capteur » 16.

Il est à noter qu'au sein du dispositif 10 de mesure, l'antenne d'émission 12, l'antenne de réception 14 et l'antenne-capteur 16 sont placées à la même hauteur, et l'antenne de réception 14 présente par rapport à l'antenne d'émission 12 un écart angulaire $\theta_{bi}$ également communément appelé angle bistatique et propre à varier de 0 à 360°.

Dans l'exemple de la figure 1, l'unité d'émission-réception 11 comporte l'antenne d'émission 12 et l'antenne de réception 14 distinctes, et est de préférence formée desdites antennes d'émission 12 et de réception 14.

En variante, non représentée, l'unité d'émission-réception 11 comporte une unique antenne d'émission et de réception d'ondes électromagnétiques. Selon cette variante, l'unité d'émission-réception 11 est de préférence formée de ladite antenne d'émission-réception. Autrement dit, cette variante correspond à un cas monostatique où les antennes d'émission 12 et de réception 14 représentées sur la figure 1 sont confondues.

Dans la suite de la description, l'homme du métier comprendra alors que l'antenne d'émission 12 correspond aussi bien à l'antenne d'émission distincte de l'antenne de réception dans l'exemple de la figure 1, qu'en variante à l'unique antenne d'émission-réception fonctionnant en émission. De manière analogue, l'homme du métier comprendra alors que l'antenne de réception 14 correspond aussi bien à l'antenne de réception distincte de l'antenne d'émission dans l'exemple de la figure 1, qu'en variante à l'unique antenne d'émission-réception fonctionnant en réception.

L'antenne d'émission 12 est excitée par une source électrique à une fréquence de travail prédéterminée selon l'application recherchée et l'énergie est transmise sous la forme d'une onde électromagnétique correspondant au champ incident électromagnétique complexe $\vec{E}_i(\theta_t, \Phi_t)$ où $\theta_t, \Phi_t$ représentent la direction du champ incident émis par l'antenne d'émission 12 en coordonnées sphériques, l'antenne d'émission 12 correspondant au centre du repère prédéterminé dans lequel de telles coordonnées sphériques sont établies.

En champ lointain, ladite antenne-capteur 16 est illuminée par l'onde transmise par l'antenne d'émission 12, et en réaction génère par rétrodiffusion une réponse électromagnétique correspondant au champ électromagnétique complexe réémis $\vec{E}_S(\theta_S, \Phi_S)$ où $\theta_S, \Phi_S$ représentent une direction quelconque du champ complexe émis par l'antenne-capteur 16 en coordonnées sphériques, l'antenne-capteur 16 correspondant au centre du repère prédéterminé dans lequel de telles coordonnées sphériques sont établies.

Un tel champ électromagnétique complexe $\vec{E}_S(\theta_S, \Phi_S)$ comprend une rétrodiffusion illustrée par les flèches 22 vers l'antenne de réception 14 et une rétrodiffusion vers l'avant illustrée sur la figure 1 par les flèches 24.

Une telle réponse électromagnétique de l'antenne-capteur 16 est de manière générale quantifiée par la Surface Equivalente Radar (SER) $\sigma$, en mètre carré, exprimée théoriquement pour une fréquence donnée en fonction du champ incident $\vec{E}_i$ généré par l'antenne d'émission 12 et le champ $\vec{E}_S$ généré par l'antenne-capteur (i.e. en fonction des directions d'émission et de réception) sous la forme suivante :

$$\sigma = \lim_{R \to \infty} 4\pi R^2 \left(\frac{E_S}{E_i}\right)^2 \qquad (1)$$

avec R la distance de définition du champ relatif à la source (i.e. la distance entre l'antenne d'émission 12 et l'antenne-capteur 16).

La Surface Equivalente Radar (SER) se caractérise par deux modes à savoir le mode structure et le mode antenne.

Le mode structure dépend de la géométrie et de la matière de l'objet illuminé, et, dans la grande majorité des situations de rétrodiffusion, correspond au mode dominant.

Le mode antenne se manifeste quant à lui à des fréquences où l'objet cible (i.e. l'antenne cible 20) résonne. Un tel mode antenne est directement lié au gain en rayonnement de l'antenne cible 20, et dépend également du rapport d'impédance entre l'antenne et une charge tel qu'illustré théoriquement dans la littérature classique par les équations suivantes :

$$\sigma = \left| \sqrt{\sigma_{struct}} - (1 - \Gamma_a) \sqrt{\sigma_{ant}} e^{j\phi_{rel}} \right|^2 \qquad (2)$$

$$E_s = E_{short} - (1 - \Gamma_a)\frac{I_0}{2I_a}E_{ant} \qquad (3)$$

où

$$: \Gamma_a = \frac{Z_a - Z_L}{Z_a + Z_L} \qquad (4)$$

avec $E_s$ le champ, de valeur complexe, rétrodiffusé par l'antenne-capteur,
$\sigma_{struct}$ la valeur réelle ou complexe de SER $\sigma$ associée au mode structure,
$\Gamma_a$ le coefficient de réflexion entre l'antenne et l'impédance de charge,
$\sigma_{ant}$ la valeur réelle ou complexe de SER $\sigma$ associée au mode antenne,
$\phi_{rel}$ le déphasage réel entre les modes antenne et structure,
$E_{short}$ le champ, de valeur complexe, rétrodiffusé par l'antenne cible 20 lorsque son ou ses ports d'excitation est(sont) en court-circuit,
$I_0$ le courant, de valeur complexe, au(x) port(s) d'excitation de l'antenne cible 20 associé à la rétrodiffusion du champ $E_{short}$,
$I_a$ le courant, de valeur complexe, au(x) port(s) d'excitation de l'antenne cible 20 associé à une source locale propre à générer le champ $E_{ant}$, de valeur complexe, rayonné par l'antenne à partir de l'excitation locale générée par ladite source locale, et
$Z_a$ l'impédance complexe vue du port d'excitation de l'antenne cible 20 lorsqu'elle ne présente qu'un seul port, et
$Z_L$ l'impédance complexe de charge de l'antenne cible 20.

Le capteur 18 de l'antenne-capteur 16 est notamment configuré pour transformer la grandeur physique d'intérêt (i.e. que l'on cherche à mesurer) en une autre grandeur compatible aux mesures, et l'antenne cible 20 joue le rôle de transducteur, en transformant la réponse du capteur, ou élément sensible, en réponse de rétrodiffusion électromagnétique. Autrement dit, ladite antenne cible 20 est un transducteur électromagnétique propre à générer, après illumination par le champ incident, une réponse électromagnétique représentative, par transduction électromagnétique, de ladite au moins une grandeur physique à mesurer par le capteur 18, les deux éléments antenne cible 20 et capteur 18 formant alors le système de mesure appelé antenne-capteur 16.

Tel qu'illustré par la figure 1, la grandeur physique, par exemple une température ou variation de température $\Delta T$, correspond à une entrée du capteur 18 qui l'associe en sortie à une impédance complexe $\Delta Z$ (également appelé précédemment et par la suite impédance de charge $Z_L$) impédance propre à modifier ensuite la réponse de l'antenne cible 20 à l'onde incidente, en impactant la polarisation du champ rétrodiffusé par l'antenne-capteur 16.

Autrement dit, l'antenne-capteur présente une impédance variable à transduction électromagnétique.

Spécifiquement selon la présente invention, par bande de fréquences prédéterminée et indépendamment de l'écart angulaire $\theta_{bi}$ entre ladite antenne d'émission 12 et ladite antenne de réception 14, le dispositif de mesure 10 selon la présente invention est configuré pour mesurer la réponse électromagnétique de l'antenne-capteur 16, au moins à partir du taux d'ellipticité AR (de l'anglais *Axial Ratio*) ou d'une variation du taux d'ellipticité $\Delta AR$ du champ électromagnétique rétrodiffusé par ladite antenne-capteur 16, le taux d'ellipticité AR quantifiant la polarisation du champ électromagnétique propre à être mesuré par l'unité d'émission-réception 11, en particulier par ladite antenne de réception 14, ladite réponse électromagnétique étant représentative, par transduction électromagnétique, de ladite au moins une grandeur physique à mesurer, par exemple une température ou variation de température $\Delta T$ tel qu'illustré par la figure 1.

Autrement dit, l'invention vise à concevoir une antenne-capteur dont la polarisation du champ rétrodiffusé est contrôlée par la variation d'impédance complexe du capteur, elle-même représentative de la grandeur physique à mesurer.

Selon un mode de réalisation de la présente invention, pour mettre en place la conversion de polarisation effectuée par l'antenne-capteur 16, le dispositif de mesure 10 est configuré pour présenter, par bande de fréquences prédéterminée, une relation bijective entre l'impédance de charge $Z_L$ (également appelée $\Delta Z$ telle qu'illustrée sur la figure 1) du capteur 18 et le taux d'ellipticité AR du champ électromagnétique propre à être rétrodiffusé par ladite antenne-capteur 16.

Plusieurs variantes de réalisation de ce mode de réalisation sont propres à être mises en oeuvre selon la présente invention.

Selon une première variante, l'impédance de charge $Z_L$ est passive, et le dispositif de mesure 10 est configuré pour présenter une plage d'impédance de charge passive, où le taux d'ellipticité AR a une variation supérieure à un seuil prédéterminé et bijective (i.e. il n'y a qu'une valeur d'impédance par taux d'ellipticité dans ladite plage).

Selon une deuxième variante, ladite antenne-capteur 16 est une antenne de radio-identification associée à une puce électronique propre à contrôler ladite impédance de charge $Z_L$. En particulier pour une application RFID, ladite antenne-capteur 16 est libellée « tag », ou encore étiquette d'identification, et le contrôle de ladite impédance de charge $Z_L$ vise notamment à répondre à des enjeux, tels que la portée, l'autonomie ou encore un faible profil de l'antenne-capteur 16.

Selon une troisième variante, ladite antenne-capteur 16 est une antenne-capteur active. En particulier, selon un aspect optionnel de cette troisième variante, le fonctionnement du capteur 18 dépend d'une source d'énergie locale constante, non représentée, correspondant par exemple à une pile, une batterie ou encore le secteur auquel le capteur est connecté, et le capteur 18 est adaptable pour notamment correspondre à des capteurs connus du commerce, tel que par exemple le capteur de température LMT70 produit par Texas Instruments.

Selon un autre aspect optionnel de cette troisième variante, le capteur 18 est configuré pour intégrer un outil, non représenté, de prétraitement et/ou d'amplification d'un signal fourni par une source d'énergie locale, un tel outil correspondant par exemple à un amplificateur de puissance et/ou à un circuit de conditionnement dudit signal et /ou à un microcontrôleur, et/ou à un filtre, et/ou à un module propre à appliquer une transduction supplémentaire au signal fourni, un tel capteur 18 enrichi d'un outil de prétraitement et/ou d'amplification correspondant alors à un système électronique.

Indépendamment de la variante mise en oeuvre de ce mode de réalisation, ce mode de réalisation permet d'expliciter le champ rétrodiffusé par l'antenne-capteur 16 en fonction d'une impédance complexe avec laquelle elle est chargée, et la variation de cette impédance contrôle directement la conversion de polarisation. Le présent mode de réalisation est applicable à tout type d'antenne cible 20 présentant au moins un port d'excitation, sous réserve que ladite antenne cible 20 fonctionne en mode antenne, et non tel qu'un élément réfléchissant (i.e. hors résonance).

En complément optionnel, ladite antenne-capteur 16 est en outre configurée pour optimiser l'amplitude et/ou la phase du champ électromagnétique rétrodiffusé, par contrôle du taux d'ellipticité du champ électromagnétique rétrodiffusé, au moyen de l'impédance de charge du capteur de l'antenne-capteur.

Un tel contrôle est mis en oeuvre selon la présente invention en tenant compte d'au moins un des deux modes caractérisant la SER, à savoir le mode structure et le mode antenne.

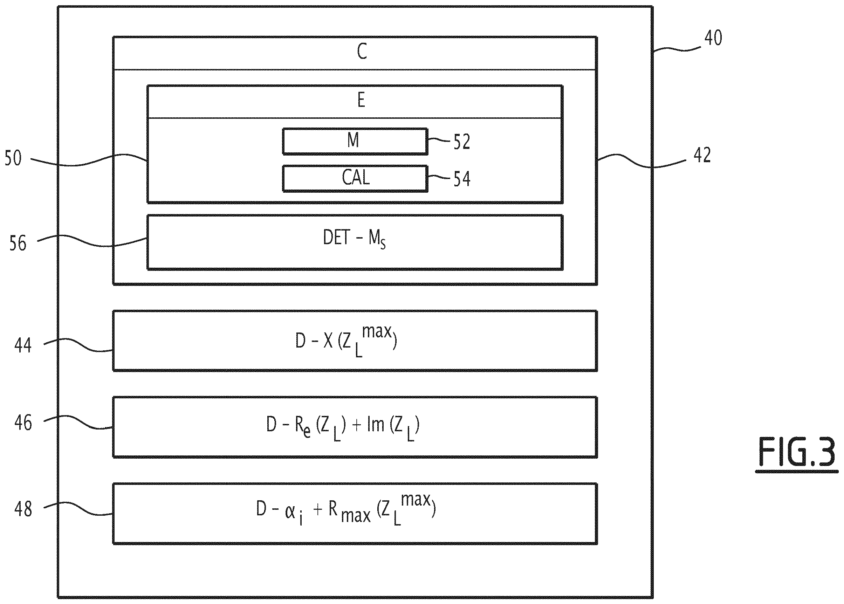

Une telle propriété additionnelle et optionnelle de l'antenne-capteur 16 est notamment propre à répondre à un objectif secondaire de la présente invention à savoir maximiser l'amplitude du signal rétrodiffusé à un taux d'ellipticité spécifique, notamment en polarisation linéaire, comme détaillé par la suite en relation avec la figure 3 illustrant un cas particulier du procédé de détermination de la plage de variation de l'impédance de charge du capteur de l'antenne-capteur du dispositif de mesure selon l'invention, et de détermination de la polarisation d'incidence de l'antenne d'émission.

L'avantage d'une telle maximisation est d'améliorer la portée de l'antenne-capteur 16 lorsque l'impact des échos perturbateurs (connu sous le nom *clutter*) est maximal en rétrodiffusion à polarisation linéaire de la composante co-polaire.

Selon une première variante optionnelle de ce complément optionnel, ladite antenne-capteur 16 est configurée pour contrôler ledit taux d'ellipticité, au moyen de l'impédance de charge du capteur 18, ladite impédance de charge $Z_L$ du capteur 18 étant propre à faire varier directement le mode antennaire de l'antenne-capteur, la valeur de ladite impédance de charge du capteur étant propre à être réglée en tenant compte du mode structure de l'antenne-capteur, ledit mode structure étant déterminé par caractérisation du champ électromagnétique rétrodiffusé associé, une telle caractérisation étant notamment, comme décrit plus en détail par la suite, obtenue au moyen d'un court-circuit chargeant l'antenne-capteur, le mode structure de l'antenne-capteur étant propre à être selon un cas extrême quasi-nul, voire nul, ce qui revient alors à ne « manipuler » que les composantes orthogonales du mode antenne de l'antenne-capteur et ses rapports d'amplitude et phase.

Selon une deuxième variante optionnelle de ce complément optionnel, ladite antenne-capteur 16 est formée d'un capteur intégré à une antenne cible présentant au moins deux ports d'excitation, ladite antenne-capteur étant configurée pour contrôler ledit taux d'ellipticité, au moyen de l'impédance de charge du capteur, ladite impédance de charge du capteur étant propre à faire varier directement les composantes orthogonales du mode antennaire de l'antenne-capteur, la valeur de ladite impédance de charge du capteur étant propre à être réglée en tenant compte du mode structure de l'antenne-capteur, ledit mode structure étant déterminé par caractérisation du champ électromagnétique rétrodiffusé associé ; une telle caractérisation étant notamment, comme décrit plus en détail par la suite, obtenue au moyen d'un court-circuit chargeant l'antenne-capteur.

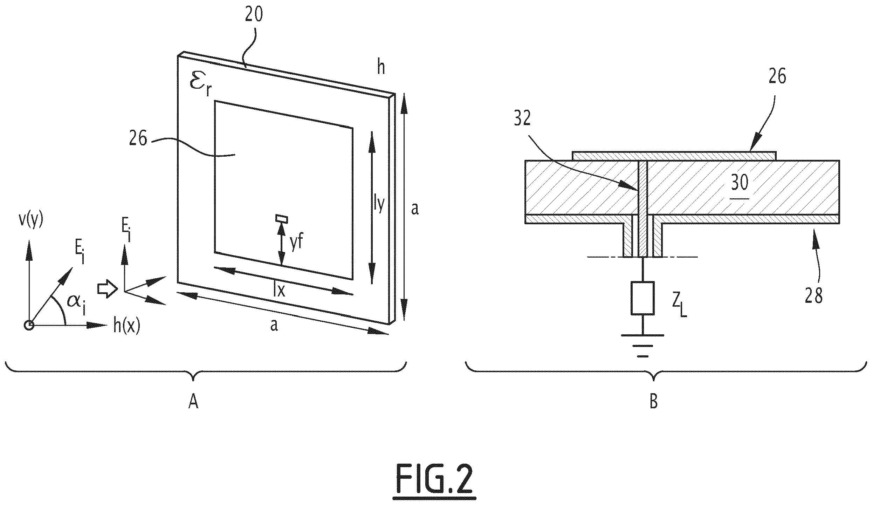

La figure 2 illustre un exemple, non limitatif, d'antenne cible 20 dudit dispositif de mesure 10 proposé selon la présente invention.

Selon cet exemple non limitatif, l'antenne cible 20 représentée dans la partie A est une antenne de type pastille micro-ruban (de l'anglais *Patch*) comprenant un élément rayonnant 26 à un port résonant à la fréquence 868 MHz et présentant une polarisation de rayonnement linéaire verticale. Les dimensions de cette antenne cible 20 sont données, à titre d'exemple non limitatif, en millimètres, avec la permittivité relative du substrat au sein du tableau ci-dessous :

[Tableau 1]

| $a$ | $l_y$ | $l_x$ | $yf$ | $h$ | $\varepsilon_{r\_substrat}$ |
|---|---|---|---|---|---|
| 200 mm | 147 mm | 134 mm | 49,3 mm | 5 mm | 4,3 |

Il est à noter que d'autres types d'antennes, sur d'autres bandes de fréquences sont propres à être utilisées selon la présente invention, de même qu'une excitation à un ou plusieurs port(s) d'excitation.

La partie B de la figure 2 correspond à une vue en coupe (i.e. en section selon l'épaisseur de l'antenne cible 20 représentée dans la partie A de la figure 2.

Selon cette vue en coupe de la partie B, l'élément rayonnant 26 est séparé d'un plan de masse 28 au moyen d'un substrat 30 et chargé via une sonde 32 par l'impédance de charge $Z_L$ du capteur 18 reliée à une extrémité à la masse.

De plus, selon cet exemple, le dispositif de mesure 10 (i.e. le système d'interrogation) est configuré de sorte que les antennes d'émission 12 et de réception 14 coïncident (i.e. partagent une électronique ou une antenne commune ce qui revient au cas monostatique où les antennes d'émission 12 et de réception 14 représentées sur la figure 1 sont confondues).

Selon cet exemple, le dispositif de mesure est également configuré de sorte que l'antenne d'émission 12 et l'antenne cible 20 soient positionnés afin que l'onde incidente émise par l'antenne d'émission 12 illumine l'antenne cible 20 *Patch* à un angle normal à sa surface.

Selon l'exemple de la figure 2, l'antenne d'émission 12 génère par exemple une onde incidente à polarisation linéaire tournée d'un angle d'inclinaison $\alpha_i$, dont la valeur 0° correspond à la polarisation horizontale h(x) et 90° la polarisation verticale v(x).

Selon l'exemple de la figure 2, il est à noter que les composantes à polarisation croisée de l'antenne-capteur 16 et en particulier celles de l'antenne cible 20 sont trop faibles pour avoir un impact.

Le champ incident $\vec{E}_i$ généré par l'antenne d'émission 12 est selon cet exemple et cet agencement propre à être exprimé via l'équation suivante, pour une direction donnée $(\theta_t, \Phi_t)$ de la direction du champ incident :

$$\vec{E}_i = |E_i|\left(\sin\alpha_i \; e^{j\delta_i}\, \hat{v} + \cos\alpha_i\, \hat{h}\right) \qquad (5),$$

où $\delta_i$ correspond au déphasage relatif entre la composante verticale et la composante horizontale.

et le champ électromagnétique complexe rétrodiffusé $E_{scat}$ par l'antenne-capteur 16 est exprimé via l'équation suivante correspondante, pour une direction donnée $(\theta_s, \Phi_s)$ de la direction du champ incident :

$$E_{scat}^V = \left[E_{short}^V - (1-\Gamma_a)\frac{I_0}{2I_a}E_{ant}^V\right]|E_i|\sin\alpha_i\, e^{j\delta_i}$$
$$E_{scat}^H = E_{short}^H|E_i|\cos\alpha_i \qquad (6)$$

où les lettres V, et H représentent les composantes verticale et horizontale respectivement.

Comme indiqué précédemment, la présente invention concerne également un procédé 40 de détermination de la plage de variation de l'impédance de charge $Z_L$ du capteur 18 de l'antenne-capteur 16 du dispositif de mesure 10 illustré par la figure 1, et de détermination de la polarisation d'incidence de l'antenne d'émission. Un cas particulier de mise en oeuvre du procédé selon la présente invention est illustré par la figure 3 et décrit par la suite.

En particulier, de manière générale, un tel procédé 40 comprend tout d'abord une étape 42 de caractérisation C du modèle de rétrodiffusion de ladite antenne-capteur 16 pour une direction d'incidence $(\theta_t, \Phi_t)$ et une direction de diffusion $(\theta_s, \Phi_s)$ prédéterminées et pour une pluralité prédéterminée de polarisations d'onde plane incidente émise par l'antenne d'émission.

Puis selon une étape 44, le procédé 40 comprend une première détermination de la réactance et/ou de la résistance de l'impédance de charge du capteur de l'antenne-capteur associée à une première valeur d'amplitude et/ou de taux d'ellipticité prédéterminée du champ rétrodiffusé associé audit modèle de rétrodiffusion en fonction de la polarisation d'onde plane incidente.

Ensuite, selon une étape 46, le procédé 40 comprend une deuxième détermination de la réactance et/ou de la résistance de l'impédance de charge du capteur associé à une deuxième valeur d'amplitude et/ou de taux de d'ellipticité prédéterminé du champ rétrodiffusé associé audit modèle de rétrodiffusion en fonction de la polarisation d'onde plane incidente.

Enfin selon une étape 48, le procédé 40 comprend une troisième détermination de la polarisation d'incidence à partir de la première détermination et à partir de la deuxième détermination.

Selon une variante particulière, l'étape 42 de caractérisation C du modèle de rétrodiffusion de ladite antenne-capteur 16 comprend une sous-étape 50 d'excitation E locale de l'antenne cible 20 de ladite antenne-capteur 16 et au cours de cette excitation E :

- une sous-étape 52 de mesure M des composantes orthogonales de son champ rayonné ;
- en fonction du nombre de port(s) d'excitation de ladite antenne cible 20, une sous-étape 54 de calcul CAL d'au moins une impédance au niveau d'une interface entre ladite antenne et une impédance de charge de ladite antenne, de valeur prédéterminée (ce qui revient à calculer les paramètres S de l'antenne cible 20 et à les transformer en ladite impédance).

De plus, selon cette variante particulière, l'étape 42 de caractérisation C comprend en outre une sous-étape 56 de détermination du mode structure de l'antenne cible 20 de ladite antenne-capteur 16 par chargement de ladite antenne cible 20 par un court-circuit et illumination par une onde incidente prédéterminée. Ainsi, selon cette variante particulière l'étape 42 fournit la caractérisation C du modèle de rétrodiffusion avec les composantes orthogonales des modes structure et antennaire de l'antenne cible 20.

Autrement dit selon cette variante particulière, au cours de l'étape 42 de caractérisation C, les valeurs $E_{short}^V$ et $E_{shortt}^H$ associées au mode structure de l'antenne cible 20 sont déterminées par chargement de ladite antenne cible 20 par un court-circuit et illumination par une onde incidente prédéterminée, et les valeurs $E_{scat}^V$ et $E_{scat}^H$ associées à ladite illumination par une onde incidente prédéterminée sont également déterminées, et ce pour une pluralité prédéterminée de polarisations, définies chacune au moyen d'une pluralité de valeurs des paramètres $\alpha_i$ d'angle d'inclinaison et $\delta_i$ de déphasage relatif entre la composante verticale et la composante horizontale de l'onde plane incidente émise par l'antenne d'émission 12.

Autrement dit, à partir de l'équation (6) précitée, et généralisable sous la forme de champs rétrodiffusés comme fonctions de 3 paramètres :
$$E_{scat}^V(\alpha_i, \delta_i, Z_L)$$
$$E_{scat}^H(\alpha_i, \delta_i, Z_L)$$
et en considérant que les paramètres liés à la polarisation d'incidence sont définis dans une certaine plage angulaire, tel que par exemple :
$$\begin{cases} -90° \leq \alpha_i \leq 90° \\ 0 \leq \delta_i \leq 360° \end{cases}$$
avec notamment un pas prédéterminé de 90° pour $\alpha_i$ et un pas de 180° pour $\delta_i$, ce qui revient à caractériser neuf combinaisons:
$$\alpha_i = [-90° \quad 0 \quad 90°]$$
$$\delta_i = [0 \quad 180° \quad 360°]$$
, le modèle de rétrodiffusion de ladite antenne-capteur 16 est caractérisé pour ces neuf combinaisons différentes de polarisations d'incidence en associant à chacune de ces neufs combinaisons (-90°, 0,$Z_{L,1}$), (-90°, 180°,$Z_{L,2}$), (-90°, 360°,$Z_{L,3}$), ..., (90°, 180°,$Z_{L,8}$), (90°, 360°,$Z_{L,9}$) respectivement un couple de résultat comprenant le champ rétrodiffusé $E_{scat}$ et le taux d'ellipticité $AR$ correspondant, à savoir respectivement ($E_{scat,1}$;$AR_1$), ($E_{scat,2}$; $AR_2$), ($E_{scat,3}$;$AR_3$), ..., ($E_{scat,8}$;$AR_8$) et ($E_{scat,9}$; $AR_9$), avec AR le taux d'ellipticité tel que :

$$AR = \frac{\sqrt{\frac{1}{2}\left(|E_{scat}^H|^2 + |E_{scat}^V|^2 + \sqrt{|E_{scat}^H|^4 + |E_{scat}^V|^4 + 2|E_{scat}^H|^2|E_{scat}^V|^2 \cos(2[\phi_v - \phi_h])}\right)}}{\sqrt{\frac{1}{2}\left(|E_{scat}^H|^2 + |E_{scat}^V|^2 - \sqrt{|E_{scat}^H|^4 + |E_{scat}^V|^4 + 2|E_{scat}^H|^2|E_{scat}^V|^2 \cos(2[\phi_v - \phi_h])}\right)}}$$

où $|E_{scat}|$ représente l'amplitude du champ rétrodiffusé (V ou H), et $\phi$ représente la phase du champ (V ou H).

Selon cet exemple général non limitatif, au cours de l'étape générale 44 de première détermination, le procédé consiste à imposer une première condition correspondant à une valeur d'amplitude du champ rétrodiffusé, par exemple ($|E_{scat}| = |E_{scat,1}|$) et/ou à un taux d'ellipticité ($AR = AR_1$), parmi les différents résultats précités associés respectivement aux différentes polarisations d'incidence utilisées lors de l'étape précédente de caractérisation 42. Autrement dit, lors de cette étape 44 de première détermination, on cherche pour chaque polarisation d'incidence ($-90°,0,Z_{L,1}$), ($-90°,180°,Z_{L,2}$), ($-90°,360°,Z_{L,3}$), ..., ($90°, 180°,Z_{L,8}$), ($90°, 360°,Z_{L,9}$), une impédance de charge $Z_{L,n}$ pour obtenir la première condition imposée ($|E_{scat,1}|;AR_1$). On obtient ainsi neuf valeurs d'impédance de charge $Z_{L,1}$, $Z_{L,2}$, $Z_{L,3}$, $Z_{L,4}$, $Z_{L,5}$, $Z_{L,6}$, $Z_{L,7}$, $Z_{L,8}$, $Z_{L,9}$ respectivement associée à chacune des neuf polarisations d'incidence précitées et satisfaisant à chaque fois l'obtention de la première condition imposée ($|E_{scat,1}|;AR_1$).

Selon cet exemple général non limitatif, au cours de l'étape générale 46 de deuxième détermination, le procédé consiste à imposer une deuxième condition correspondant à une autre valeur d'amplitude du champ rétrodiffusé, par exemple ($|E_{scat}| = |E_{scat,2}|$) et/ou à un taux d'ellipticité ($AR = AR_2$), parmi les différents résultats précités associés respectivement aux différentes polarisations d'incidence utilisées lors de l'étape précédente de caractérisation 42. Autrement dit, lors de cette étape 46 de deuxième détermination, on cherche pour chaque polarisation d'incidence ($-90°, 0,Z_{L,10}$), ($-90°, 180°,Z_{L,11}$), ($-90°, 360°,Z_{L,12}$), ..., ($90°,180°,Z_{L,17}$), ($90°, 360°,Z_{L,18}$), une impédance de charge $Z_{L,n>9}$ pour obtenir la deuxième condition imposée ($|E_{scat,2}|;AR_2$). On obtient ainsi neuf valeurs d'impédance de charge $Z_{L,10}$, $Z_{L,11}$, $Z_{L,12}$, $Z_{L,13}$, $Z_{L,14}$, $Z_{L,15}$, $Z_{L,16}$, $Z_{L,17}$, $Z_{L,18}$ respectivement associée à chacune des neuf polarisations d'incidence précitées et satisfaisant à chaque fois l'obtention de la première condition imposée ($|E_{scat,2}|; AR_2$). Selon cet exemple général non limitatif, au cours de l'étape générale 48 de troisième détermination de la polarisation d'incidence (i.e. le couple d'angles ($\alpha_i, \delta_i$)) à partir du résultat de la première et de la deuxième détermination, les résultats des deux étapes 44 et 46 de détermination sont comparés de sorte à choisir la polarisation d'incidence et la paire d'impédances qui satisfont, par exemple non limitatif, $Re\{Z_L^1\} = Re\{Z_L^2\}$ ou $(R_L^1 = R_L^2)$, l'exposant 1 et 2 étant respectivement associé aux première et deuxième conditions imposées au cours des première et deuxième détermination ce qui revient à la comparaison du tableau ci-dessous :

[Tableau 2]

| Résultat de la première détermination 44 | Résultat de la deuxième détermination 46 |
|---|---|
| ($-90°, 0°, Z_{L,1}$) $\rightarrow$ $\|E_{scat,1}\|;AR_1$ | ($-90°, 0°,Z_{L,10}$) $\rightarrow$ $\|E_{scat,2}\|;AR_2$ |
| ($-90°,180°,Z_{L,2}$) $\rightarrow$ $\| E_{scat,1}\|;AR_1$ | ($-90°, 180°,Z_{L,11}$) $\rightarrow$ $\|E_{scat,2}\|;AR_2$ |
| ($-90°, 360°,Z_{L,3}$) $\rightarrow$ $\|E_{scat,1}\|;AR_1$ | ($-90°, 360°, Z_{L,12}$) $\rightarrow$ $\|E_{scat,2}\|;AR_2$ |
| ($0°,0°,Z_{L,4}$) $\rightarrow$ $\|E_{scat,1}\|;AR_1$ | ($0°,0°,Z_{L,13}$) $\rightarrow$ $\|E_{scat,2}\|;AR_2$ |
| ($0°, 180°,Z_{L,5}$) $\rightarrow$ $\|E_{scat,1}\|;AR_1$ | ($0°, 180°,Z_{L,14}$) $\rightarrow$ $\|E_{scat,2}\|;AR_2$ |
| ($0°, 360°,Z_{L,6}$) $\rightarrow$ $\|E_{scat,1}\|;AR_1$ | ($0°, 360°,Z_{L,15}$) $\rightarrow$ $\|E_{scat,2}\|;AR_2$ |
| ($90°,0,Z_{L,7}$) $\rightarrow$ $\|E_{scat,1}\|;AR_1$ | ($90°,0°,Z_{L,16}$) $\rightarrow$ $\|E_{scat,2}\|;AR_2$ |
| ($90°,180°, Z_{L,8}$) $\rightarrow$ $\|E_{scat,1}\|;AR_1$ | ($90°, 180°, Z_{L,17}$) $\rightarrow$ $\|E_{scat,2}\|;AR_2$ |
| ($90°,360°,Z_{L,9}$) $\rightarrow$ $\|E_{scat,1}\|;AR_1$ | ($90°,360°,Z_{L,18}$) $\rightarrow$ $\|E_{scat,2}\|;AR_2$ |

A titre d'exemple non limitatif, de cette comparaison résulte l'identification de la polarisation ($0°, 360°$) à laquelle $Z_{L,6} = Z_L^1$ et $Z_{L,15} = Z_L^2$ satisfont l'égalité recherchée ($R_{L,6} = R_{L,15} \geq 0$).

Selon un cas particulier de mise en oeuvre de ce procédé 40 illustré par la figure 3, on cherche à déterminer la variation, de l'impédance du capteur 18 à souder sur l'antenne-capteur 16, permettant de passer de la polarisation linéaire à la polarisation circulaire, une telle impédance du capteur correspondant alors à l'impédance de charge $Z_L$ du capteur 18 appliquée à l'antenne cible 20 de l'antenne-capteur 16 tel qu'illustré par la partie B de la figure 2 précédemment décrite.

Dans ce cas particulier, illustré par la figure 3, l'étape de caractérisation 42 est alors mise en oeuvre pour une pluralité prédéterminée de polarisations linéaires d'onde plane incidente émise par l'antenne d'émission 12.

Autrement dit, cette première étape 42 revient à acquérir les valeurs des modes structure et antenne de l'antenne cible 20. Pour cela, l'antenne cible 20 est d'abord excitée localement, afin de mesurer son champ rayonné $E_{ant}^V$ et calculer son impédance $Z_a$ au niveau de l'interface entre l'antenne cible 20 et l'éventuelle charge $Z_L$, tel qu'illustré par la partie B de la figure 2, et ensuite chargée par un court-circuit et illuminée par une onde incidente $E_i$ afin d'identifier

son mode structure $E_{short}^V$ et $E_{short}^H$ .

En outre, lors de cette étape la mesure du champ rétrodiffusé en circuit ouvert $E_{open}^V$ est optionnellement ajoutée afin de calculer de façon indirecte le courant de court-circuit $I_0$, en suivant la relation donnée par l'équation (7) suivante :

$$I_0 = \left(E_{short}^V - E_{open}^V\right)\frac{I_a}{E_{ant}^V} \qquad (7)$$

Il est à noter que cette étape de caractérisation 42 du modèle de rétrodiffusion est mono-fréquentielle pour des directions d'incidence et de rétrodiffusion données (i.e. une nouvelle mesure est nécessaire en cas de changement de la direction d'incidence ou de la direction de rétrodiffusion).

Par la suite, à titre d'exemple non limitatif, la fréquence f = 868 MHz, la direction d'incidence $(\theta_t,\ \Phi_t)$ = (0,0) et la direction de rétrodiffusion $(\theta_s,\ \phi_s)$ = (0,0) sont notamment considérées et appliquées à l'exemple d'antenne cible 20 précédemment décrit en relation avec la figure 2, ce qui revient à considérer un cas monostatique, et les valeurs correspondantes mesurées lors de l'étape de caractérisation 42 sont indiquées au sein du tableau ci-dessous :

[Tableau 3]

| $Z_a$ (Ω) | $I_0 E_{ant}^V/$ $I_a$ (V/m) | $E_{short}^V$ (V/m) | $E_{short}^H$ (V/m) |
|---|---|---|---|
| $53 - j6.2$ | $0.334e^{j2.92}$ | $0.212e^{j3.04}$ | $0.197e^{-j2.10}$ |

De plus, dans ce cas particulier, illustré par la figure 3, l'étape de première détermination 44 correspond à la détermination, appelée « $D - X(Z_L^{max})$ » sur la figure 3, de la réactance de l'impédance de charge du capteur de l'antenne-capteur maximisant la valeur du champ rétrodiffusé associé audit modèle de rétrodiffusion ce qui revient à maximiser la SER et avoir une polarisation linéaire.

Autrement dit, selon cet exemple particulier, la première condition imposée lors de l'étape de première détermination 44 est de maximiser la SER et également d'avoir une polarisation linéaire, et la valeur $Z_{L,1} = Z_L^{max}$ est telle que $Z_{L,1} = Z_L^1 = Z_L^{max} = R + jX^{max}$.

En considérant à nouveau, à titre d'exemple non limitatif, la fréquence f = 868 MHz, la direction d'incidence $(\theta_t, \phi_t)$ = (0,0) et la direction de rétrodiffusion $(\theta_s, \phi_s)$ = (0,0) appliquées à l'exemple d'antenne cible 20 précédemment décrit en relation avec la figure 2, la valeur $Z_L^{max}$ calculée et validée par simulation est $Z_L^{max} = 0 + j21\ \Omega$, (i.e. purement réactive). Cette valeur de réactance servant de référence pour la prochaine étape de deuxième détermination.

De plus, selon ce cas particulier où l'on cherche à déterminer la variation de l'impédance de charge $Z_L$ permettant de passer de la polarisation linéaire à la polarisation circulaire, lors de l'étape de deuxième détermination 46, appelée « D - Re(Z_L)+Im(Z_L) » sur la figure 3, la deuxième condition imposée consiste à déterminer les valeurs d'impédance $Z_L^2$ permettant d'obtenir une polarisation circulaire (i.e. un taux d'ellipticité égal à un).

Autrement dit, selon ce cas particulier, à partir du système d'équations (5) et (6) précité, le procédé selon la présente invention permet d'identifier, dans ce cas particulier, la valeur de l'impédance afin de que le taux d'ellipticité soit égal à un, soit une polarisation circulaire. Cette polarisation circulaire est conditionnée à la fois par une égalité d'amplitude entre les composantes horizontale et verticale, et aussi par un déphasage de $\pm 90°$ (ou $\pm \pi/2$. rad), comme vu dans l'équation (8) suivante, où l'orientation est associée à l'indice (+ pour Main Gauche et - pour la Main Droite) :

$$E_{scat}^V = \pm j E_{scat}^H \leftrightarrow \begin{cases} \left|E_{scat}^V\right| = \left|E_{scat}^H\right| \\ \phi_V = \phi_H \pm \frac{\pi}{2}\ rad \end{cases} (8).$$

En imposant les conditions de l'équation (7) sur l'équation (6) et en prenant en considération la définition du coefficient de réflexion de l'équation (4), il est possible, selon la présente invention, de calculer l'impédance de conversion de polarisation (i.e. l'impédance de charge $Z_L$ du capteur 18, tel qu'exprimé au sein de l'équation (9) suivante :

$$Z_L^{\pm} = Z_a \frac{(\pm j E_{short}^V \sin \alpha_i e^{j\delta_i} - E_{short}^H \cos \alpha_i)}{\pm j \frac{I_0}{2I_a} E_{ant}^V \sin \alpha_i e^{j\delta_i} - (\pm j E_{short}^V \sin \alpha_i e^{j\delta_i} - E_{short}^H \cos \alpha_i)} \quad (9).$$

En s'appuyant sur le modèle de rétrodiffusion caractérisé lors de l'étape 42, les valeurs réelles (résistance) et imaginaires (réactance) de l'impédance à taux d'ellipticité unitaire sont calculées en fonction de l'angle $\alpha_i$ de l'onde plane par rapport à l'antenne cible 20 (voir l'équation (9) ci-dessus), et ce en considérant à nouveau, à titre d'exemple non limitatif, la fréquence $f$ = 868 MHz, la direction d'incidence ($\theta_t$, $\phi_t$) = (0,0) et la direction de rétrodiffusion ($\theta_s$, $\phi_s$) = (0,0) appliquées à l'exemple d'antenne cible 20 précédemment décrit en relation avec la figure 2 et en imposant une onde incidente à polarisation linéaire ($\delta_i$ = 0).

Enfin selon ce cas particulier où l'on cherche à déterminer la variation de l'impédance de charge $Z_L$ permettant de passer de la polarisation linéaire à la polarisation circulaire, l'étape 48 de troisième détermination, appelée « D - $\alpha_i$ + R$_{max}(Z_L^{max})$ » sur la figure 3, correspond alors à la détermination de la polarisation d'incidence correspondant à la fois à une charge prédéterminée et à la réactance de l'impédance de charge du capteur de l'antenne-capteur maximisant la valeur du champ rétrodiffusé associé audit modèle de rétrodiffusion, et obtention de la valeur de résistance maximale de l'impédance de charge du capteur associée à une rétrodiffusion en polarisation circulaire, ladite plage de variation de l'impédance de charge du capteur de l'antenne-capteur correspondant à la plage de variation de la résistance de l'impédance de charge du capteur entre la valeur zéro, associée à un taux d'ellipticité maximal, et ladite valeur de résistance maximale, associée à une valeur égale à un en linéaire (nulle en dB) du taux d'ellipticité, pour une valeur de réactance constante égale à la réactance de l'impédance de charge du capteur de l'antenne-capteur maximisant la valeur du champ rétrodiffusé associé audit modèle de rétrodiffusion.

Autrement dit, cette troisième détermination 48 permet d'obtenir la polarisation d'incidence qui permet d'avoir une égalité de partie imaginaire des impédances résultant de la première étape de détermination 44 et de la deuxième étape de détermination 46 tel que : $\text{Im}(Z_L^1) = \text{Im}(Z_L^2) = X^{max}$, et d'obtenir la partie réelle de $Z_L^2$ associée à cette égalité.

Ainsi, en considérant à nouveau, à titre d'exemple non limitatif, la fréquence $f$ = 868 MHz, la direction d'incidence ($\theta_t$, $\phi_t$) = (0,0) et la direction de rétrodiffusion ($\theta_s$, $\phi_s$) = (0,0) appliquées à l'exemple d'antenne cible 20 précédemment décrit en relation avec la figure 2, cette troisième détermination 48 consiste à déterminer à quel angle d'inclinaison d'incidence la réactance ($X_L^{max} = 21\Omega$) calculée lors de la première étape de détermination 44 coïncide avec la valeur où la SER est maximale et également où la charge est passive ($R \geq 0$), soit $\alpha_i$ = 74° selon les simulations avec une impédance de charge $Z_L^2$ associée $Z_L^2 = 66 + j21 \, \Omega$.

Autrement dit, au terme du procédé selon l'invention mis en oeuvre dans ce cas particulier où l'on cherche à déterminer la variation de l'impédance de charge $Z_L$ permettant de passer de la polarisation linéaire à la polarisation circulaire, en considérant à nouveau, à titre d'exemple non limitatif, la fréquence $f$ = 868 MHz, la direction d'incidence ($\theta_t$, $\phi_t$) = (0,0) et la direction de rétrodiffusion ($\theta_s$, $\phi_s$) = (0,0) appliquées à l'exemple d'antenne cible 20 précédemment décrit en relation avec la figure 2, il est déterminé une impédance de charge du capteur 18 dont la résistance est propre à varier entre 0 et 66 $\Omega$ en gardant une réactance constante de 21 $\Omega$. Cette dynamique d'impédance se traduit comme une variation, en dB, du taux d'ellipticité de 14 à 0.

Une telle variation d'impédance de charge permet de contrôler de manière précise le mode antenne de l'antenne cible 20.

Il est à noter que le procédé selon la présente invention a été validé par simulation électromagnétique pour cet exemple où la fréquence $f$ = 868 MHz, la direction d'incidence ($\theta_t$, $\phi_t$) = (0,0) et la direction de rétrodiffusion ($\theta_s$, $\phi_s$) = (0,0) sont appliquées à l'exemple d'antenne cible 20 précédemment décrit en relation avec la figure 2, et qu'une telle simulation illustre alors que le taux d'ellipticité, en dB, s'approche d'une fonction linéaire de la résistance conforme à l'une des caractéristiques optionnelles de la présente invention selon laquelle le dispositif de mesure est configuré pour présenter, par bande de fréquences prédéterminée, une relation bijective entre l'impédance de charge du capteur et le taux d'ellipticité.

De plus, une telle simulation permet également de vérifier l'obtention, via le procédé selon la présente invention, d'une variation d'amplitude du champ rétrodiffusé bijective par rapport à la résistance de charge, et également d'une maximisation du module de la SER lorsque le taux d'ellipticité représente une polarisation linéaire, le contrôle de la valeur du module de la SER permettant d'obtenir un degré de liberté additionnel à optimiser en fonction de l'application visée.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de prendre en compte le mode antenne et le mode structure de l'antenne cible afin de quantifier de manière optimale la polarisation du champ électromagnétique de l'antenne-capteur à partir du taux d'ellipticité du champ électromagnétique rétrodiffusé par ladite antenne-capteur.

Autrement dit, le principe de la présente invention est de baser le dispositif de mesure d'au moins une grandeur physique (i.e. le système d'interrogation) de l'antenne-capteur sur la mesure du taux d'ellipticité du champ rétrodiffusé dans une bande de fréquences donnée, ce qui permet notamment une utilisation au sein d'un système de réglage de température (ou autre variable) d'un laboratoire ou d'une usine (milieux fortement réverbérants), en lisant le signal des antennes-capteur avec des portées plus importantes du fait de la maximisation de l'amplitude du signal rétrodiffusé à un taux d'ellipticité spécifique propre à être obtenue selon la présente invention, ou une utilisation dans des plages de fréquences plus hautes afin de réduire la taille de l'antenne cible, ce qui permet de réduire également la taille des capteurs par rapport au dispositif de mesure, ou encore une utilisation en vue de surveiller l'intégrité des structures (de l'anglais *Structural Health Monitoring*) afin de distinguer l'état d'un élément physique par le taux d'ellipticité, discrétisé, en gardant une portée importante.

## Revendications

1. Dispositif de mesure (10) d'au moins une grandeur physique, le dispositif de mesure comprenant au moins :

   - une unité (11) d'émission-réception d'ondes électromagnétiques,
   - une antenne-capteur (16) formée d'un capteur (18) intégré à une antenne cible (20) présentant au moins un port d'excitation, l'antenne-capteur (16) présentant une impédance variable à transduction électromagnétique,

   **caractérisé en ce que**, par bande de fréquences prédéterminée et indépendamment d'un écart angulaire entre l'émission et la réception d'ondes, le dispositif de mesure (10) est configuré pour mesurer une réponse électromagnétique de l'antenne-capteur (16) au moins à partir d'un taux d'ellipticité d'un champ électromagnétique rétrodiffusé par ladite antenne-capteur, le taux d'ellipticité caractérisant la polarisation du champ électromagnétique propre à être mesuré par ladite unité d'émission-réception (11), ladite réponse électromagnétique étant représentative, par transduction électromagnétique, de ladite au moins une grandeur physique à mesurer.

2. Dispositif de mesure (10) selon la revendication 1, dans lequel le dispositif de mesure (10) est configuré pour présenter, par bande de fréquences prédéterminée, une relation bijective entre l'impédance de charge du capteur (18) et le taux d'ellipticité du champ électromagnétique propre à être rétrodiffusé par ladite antenne-capteur (16).

3. Dispositif de mesure (10) selon la revendication 2, dans lequel l'impédance de charge est passive.

4. Dispositif de mesure (10) selon la revendication 2, dans lequel ladite antenne-capteur (16) est une antenne de radio-identification associée à une puce électronique propre à contrôler ladite impédance de charge.

5. Dispositif de mesure (10) selon la revendication 2, dans lequel ladite antenne-capteur (16) est une antenne-capteur active.

6. Dispositif de mesure (10) selon la revendication 5, dans lequel le fonctionnement du capteur (18) dépend d'une source d'énergie locale constante.

7. Dispositif de mesure (10) selon la revendication 5, dans lequel le capteur (18) est configuré pour intégrer un outil de prétraitement et/ou d'amplification d'un signal fourni par une source d'énergie locale.

8. Dispositif de mesure (10) selon l'une quelconque des revendications précédentes, dans lequel ladite antenne-capteur est en outre configurée pour optimiser l'amplitude et/ou la phase du champ électromagnétique rétrodiffusé, par contrôle du taux d'ellipticité du champ électromagnétique rétrodiffusé, au moyen de l'impédance de charge du capteur de l'antenne-capteur.

**9.** Dispositif de mesure (10) selon la revendication 8, dans lequel ladite antenne-capteur (16) est configurée pour contrôler ledit taux d'ellipticité, au moyen de l'impédance de charge du capteur, ladite impédance de charge du capteur étant propre à faire varier directement le mode antennaire de l'antenne-capteur (16), la valeur de ladite impédance de charge du capteur (18) étant propre à être réglée en tenant compte du mode structure de l'antenne-capteur (16), ledit mode structure étant déterminé par caractérisation du champ électromagnétique rétrodiffusé associé.

**10.** Dispositif de mesure (10) selon la revendication 8, dans lequel ladite antenne-capteur (16) est formée d'un capteur (18) intégré à une antenne cible (20) présentant au moins deux ports d'excitation, ladite antenne-capteur (16) étant configurée pour contrôler ledit taux d'ellipticité, au moyen de l'impédance de charge du capteur (18), ladite impédance de charge du capteur (18) étant propre à faire varier directement les composantes orthogonales du mode antennaire de l'antenne-capteur (16), la valeur de ladite impédance de charge du capteur (18) étant propre à être réglée en tenant compte du mode structure de l'antenne-capteur (16), ledit mode structure étant déterminé par caractérisation du champ électromagnétique rétrodiffusé associé.

**11.** Procédé (40) de détermination de la plage de variation de l'impédance de charge du capteur de l'antenne-capteur du dispositif de mesure selon l'une quelconque des revendications précédentes, et de détermination de la polarisation d'incidence de l'unité d'émission-réception (11) lors de l'émission d'onde, le procédé comprenant les étapes suivantes, par bande de fréquences prédéterminée :

- caractérisation (42) du modèle de rétrodiffusion de ladite antenne-capteur pour une direction d'incidence et une direction de diffusion prédéterminées et pour une pluralité prédéterminée de polarisations d'onde plane incidente émise par l'unité d'émission-réception (11),
- première détermination (44) de la réactance et/ou de la résistance de l'impédance de charge du capteur de l'antenne-capteur associée à une première valeur d'amplitude et/ou de taux d'ellipticité prédéterminée du champ rétrodiffusé associé audit modèle de rétrodiffusion en fonction de la polarisation d'onde plane incidente,
- deuxième détermination (46) de la réactance et/ou de la résistance de l'impédance de charge du capteur associé à une deuxième valeur d'amplitude et/ou de taux de d'ellipticité prédéterminé du champ rétrodiffusé associé audit modèle de rétrodiffusion en fonction de la polarisation d'onde plane incidente,
- troisième détermination (48) de la polarisation d'incidence à partir de la première détermination et à partir de la deuxième détermination.

**12.** Procédé (40) de détermination selon la revendication 11 dans lequel :

- l'étape de caractérisation est mise en oeuvre pour une pluralité prédéterminée de polarisations linéaires d'onde plane incidente émise par l'unité d'émission-réception (11) ;
- l'étape de première détermination correspond à la détermination de la réactance de l'impédance de charge du capteur de l'antenne-capteur maximisant la valeur du champ rétrodiffusé associé audit modèle de rétrodiffusion ; et
- l'étape de troisième détermination correspond à la détermination de la polarisation d'incidence correspondant à la fois à une charge prédéterminée et à la réactance de l'impédance de charge du capteur de l'antenne-capteur maximisant la valeur du champ rétrodiffusé associé audit modèle de rétrodiffusion, et obtention de la valeur de résistance maximale de l'impédance de charge du capteur associée à une rétrodiffusion en polarisation circulaire, ladite plage de variation de l'impédance de charge du capteur de l'antenne-capteur correspondant à une plage de variation de la résistance de l'impédance de charge du capteur entre la valeur zéro, associée à un taux d'ellipticité maximal, et ladite valeur de résistance maximale, associée à une valeur nulle du taux d'ellipticité, pour une valeur de réactance constante égale à la réactance de l'impédance de charge du capteur de l'antenne-capteur maximisant la valeur du champ rétrodiffusé associé audit modèle de rétrodiffusion.

**13.** Procédé (40) de détermination selon la revendication 11 ou 12, dans lequel ladite étape de caractérisation (42) du modèle de rétrodiffusion de ladite antenne-capteur comprend :

- l'excitation (50) locale de l'antenne de ladite antenne-capteur et :

+ la mesure (52) des composantes orthogonales de son champ rayonné ;
+ en fonction du nombre de port(s) d'excitation de ladite antenne cible, le calcul (54) d'au moins une impédance au niveau d'une interface entre ladite antenne et une impédance de charge de ladite antenne, de valeur prédéterminée ;

- la détermination (56) du mode structure de l'antenne de ladite antenne-capteur par chargement de ladite antenne par un court-circuit et illumination par une onde incidente prédéterminée.

**Patentansprüche**

1. Vorrichtung (10) zum Messen mindestens einer physikalischen Größe, wobei die Messvorrichtung mindestens Folgendes aufweist:

   - eine Einheit (11) zum Senden und Empfangen von elektromagnetischen Wellen,
   - eine Sensorantenne (16), die aus einem Sensor (18) gebildet ist, der in eine Zielantenne (20) mit mindestens einem Anregungsanschluss integriert ist, wobei die Sensorantenne (16) eine elektromagnetisch transduzierte variable Impedanz aufweist,

   **dadurch gekennzeichnet, dass** die Messvorrichtung (10) pro vorbestimmtem Frequenzband und unabhängig von einer Winkelabweichung zwischen dem Senden und dem Empfangen von Wellen zum Messen einer elektromagnetischen Antwort der Sensorantenne (16) konfiguriert ist, zumindest aus einer Elliptizitätsrate eines durch die Sensorantenne reflektierten elektromagnetischen Feldes, wobei die Elliptizitätsrate die Polarisierung des elektromagnetischen Feldes kennzeichnet, die von der Sende- und Empfangseinheit (11) gemessen werden kann. Die elektromagnetische Antwort ist durch elektromagnetische Transduktion repräsentativ für die mindestens eine zu messende physikalische Größe.

2. Messvorrichtung (10) nach Anspruch 1, wobei die Messvorrichtung (10) so konfiguriert ist, dass sie pro vorbestimmtem Frequenzband eine bijektive Beziehung zwischen der Lastimpedanz des Sensors (18) und der Elliptizitätsrate des elektromagnetischen Feldes präsentiert, das geeignet ist, von der Sensorantenne (16) zurückgestreut zu werden.

3. Messvorrichtung (10) nach Anspruch 2, bei der die Lastimpedanz passiv ist.

4. Messvorrichtung (10) nach Anspruch 2, bei der die Sensorantenne (16) eine Antenne zur Funkidentifikation ist, die mit einem elektronischen Chip verbunden ist, der geeignet ist, die Lastimpedanz zu steuern.

5. Messvorrichtung (10) nach Anspruch 2, wobei die Sensorantenne (16) eine aktive Sensorantenne ist.

6. Messvorrichtung (10) nach Anspruch 5, wobei der Betrieb des Sensors (18) von einer konstanten lokalen Energiequelle abhängt.

7. Messvorrichtung (10) nach Anspruch 5, wobei der Sensor (18) so konfiguriert ist, dass er ein Werkzeug zur Vorverarbeitung und/oder Verstärkung eines Signals integriert, das von einer lokalen Energiequelle geliefert wird.

8. Messvorrichtung (10) nach einem der vorhergehenden Ansprüche, wobei die Sensorantenne ferner so konfiguriert ist, dass sie die Amplitude und/oder die Phase des rückgestreuten elektromagnetischen Feldes durch Steuerung der Elliptizitätsrate des rückgestreuten elektromagnetischen Feldes mittels der Lastimpedanz des Sensors der Sensorantenne optimiert.

9. Messvorrichtung (10) nach Anspruch 8, wobei die Sensorantenne (16) so konfiguriert ist, dass sie die Elliptizitätsrate mittels der Lastimpedanz des Sensors steuert, wobei die Lastimpedanz des Sensors geeignet ist, den Antennenmodus der Sensorantenne (16) direkt zu variieren, wobei der Wert der Lastimpedanz des Sensors (18) geeignet ist, unter Berücksichtigung des Strukturmodus der Sensorantenne (16) eingestellt zu werden, wobei der Strukturmodus durch Charakterisierung des zugehörigen rückgestreuten elektromagnetischen Feldes bestimmt wird.

10. Messvorrichtung (10) nach Anspruch 8, wobei die Sensorantenne (16) aus einem Sensor (18) gebildet ist, der in eine Zielantenne (20) integriert ist, die mindestens zwei Anregungsanschlüsse aufweist. Die Sensorantenne (16) ist so konfiguriert, dass sie die Elliptizitätsrate mittels der Lastimpedanz des Sensors (18) steuert, wobei die Lastimpedanz des Sensors (18) so ausgelegt ist, dass er direkt die orthogonalen Komponenten des Antennenmodus der Sensorantenne (16) variiert, wobei der Wert der Lastimpedanz des Sensors (18) so ausgelegt ist, dass er in Abhängigkeit vom Strukturmodus der Sensorantenne (16) angepasst werden kann, wobei der Strukturmodus durch Charakterisierung des zugehörigen rückgestreuten elektromagnetischen Feldes bestimmt wird.

11. Verfahren (40) zum Bestimmen des Schwankungsbereichs der Lastimpedanz des Antennensensors der Messvorrichtung nach einem der vorhergehenden Ansprüche und zum Bestimmen der Einfallspolarisation der Sende-/Empfangseinheit (11) bei der Wellenaussendung, wobei das Verfahren die folgenden Schritte pro vorbestimmtem Frequenzband umfasst:

- Charakterisieren (42) des Rückstreuungsmusters der Sensorantenne für eine vorbestimmte Einfallsrichtung und eine vorbestimmte Streurichtung und für eine vorbestimmte Vielzahl von Polarisationen der einfallenden ebenen Welle, die von der Sende-Empfangseinheit (11) ausgesendet wird,
- erste Bestimmung (44) der Reaktanz und/oder des Widerstands der Lastimpedanz des Sensors der Sensorantenne, die mit einem ersten vorbestimmten Amplituden- und/oder Elliptizitätsverhältniswert des Rückstreufeldes verbunden ist, das mit dem Rückstreuungsmuster verbunden ist, als Funktion der einfallenden ebenen Wellenpolarisation,
- zweite Bestimmung (46) der Reaktanz und/oder des Widerstands der Lastimpedanz des Sensors, die mit einem zweiten Wert der Amplitude und/oder des Elliptizitätsverhältnisses verbunden ist, der vom Rückstreufeld bestimmt wird, das mit dem genannten Rückstreuungsmuster verbunden ist, als Funktion der Polarisation der einfallenden ebenen Welle,
- dritte Bestimmung (48) der Einfallspolarisation aus der ersten Bestimmung und aus der zweiten Bestimmung.

12. Verfahren (40) zur Bestimmung nach Anspruch 11, wobei:

- der Schritt des Charakterisierens für eine vorbestimmte Vielzahl von linearen Polarisationen der einfallenden ebenen Welle, die von der Sende-/Empfangseinheit (11) emittiert wird, durchgeführt wird;
- der Schritt der ersten Bestimmung der Bestimmung der Reaktanz der Lastimpedanz des Antennensensors entspricht, die den Wert des Rückstreufeldes maximiert, das mit dem Rückstreuungsmuster verbunden ist; und
- der Schritt der dritten Bestimmung der Bestimmung der Einfallspolarisation entspricht, die sowohl einer vorbestimmten Last als auch der Reaktanz der Lastimpedanz des Sensors der Sensorantenne entspricht, die den Wert des Rückstrahlungsfeldes maximiert, der mit dem Rückstreuungsmuster verbunden ist, und Erhalt des maximalen Widerstandswert der Lastimpedanz des Sensors, der mit einer Rückstreuung in kreisförmiger Polarisation verbunden ist, wobei der Schwankungsbereich des Lastwiderstands des Sensors der Sensorantenne einem Schwankungsbereich des Widerstands der Lastimpedanz des Sensors zwischen dem Wert Null, der mit einer maximalen Elliptizitätsrate verbunden ist, und dem maximalen Widerstandswert entspricht, der mit einem Nullwert des Elliptizitätsverhältnisses, für einen konstanten Blindwiderstandswert, der gleich dem Blindwiderstand der Sensor-Lastimpedanz der Sensorantenne ist verbunden ist, der den Wert des mit dem Rückstreuungsmuster verbundenen Rückstreufeldes maximiert.

13. Verfahren (40) zur Bestimmung nach Anspruch 11 oder 12, wobei der Schritt des Charakterisierens (42) des Rückstreuungsmusters der Sensorantenne umfasst:

- die lokale Antennenanregung (50) der Sensorantenne und:

+ die Messung (52) der orthogonalen Komponenten seines abgestrahlten Feldes;
+ in Abhängigkeit von der Anzahl von Anregungsanschlüssen der Zielantenne, Berechnen (54) mindestens einer Impedanz an einer Schnittstelle zwischen der Antenne und einer Lastimpedanz der Antenne mit einem vorbestimmten Wert;

- Bestimmen (56) des Antennenstrukturmodus der Sensorantenne durch Laden der Antenne mit einem Kurzschluss und Beleuchten mit einer vorbestimmten einfallenden Welle.

## Claims

1. Measuring device (10) for at least one physical quantity, the measuring device comprising at least:

- a transceiver unit (11) for electromagnetic waves,
- an antenna-sensor (16) consisting of a sensor (18) integrated into a target antenna (20) having at least one excitation port, the antenna-sensor (16) having a variable impedance with electromagnetic transduction,

**characterized in that**, per predetermined frequency band and independently of an angular deviation between the transmission and the reception of waves, the measuring device (10) is configured to measure an electromagnetic response of the antenna-sensor (16) at least from an ellipticity rate of an electromagnetic field backscattered by said antenna-sensor, the ellipticity rate characterizing the polarization of the electromagnetic field configured to be measured by said transceiver unit (11), said electromagnetic response being representative, by electromagnetic transduction, of said at least one physical quantity to be measured.

2. Measuring device (10) according to claim 1, wherein the measuring device (10) is configured to have, per predetermined frequency band, a bijective relationship between the load impedance of the sensor (18) and the ellipticity rate of the electromagnetic field configured to be backscattered by said antenna-sensor (16).

3. Measuring device (10) according to claim 2, wherein the load impedance is passive.

4. Measuring device (10) according to claim 2, wherein said antenna-sensor (16) is a radio identification antenna associated with an electronic chip configured to control said load impedance.

5. Measuring device (10) according to claim 2, wherein said antenna-sensor (16) is an active antenna-sensor.

6. Measuring device according to claim 5, wherein the functioning of the sensor (18) depends on a constant local energy source.

7. Measuring device (10) according to claim 5, wherein the sensor (18) is configured to integrate a tool for preprocessing and/or amplifying a signal provided by a local power source.

8. Measuring device (10) according to any one of the preceding claims, wherein said antenna-sensor is further configured to optimize the amplitude and/or phase of the backscattered electromagnetic field by controlling the ellipticity rate of the backscattered electromagnetic field, by using the sensor load impedance of the antenna-sensor.

9. Measuring device (10) according to claim 8, wherein said antenna-sensor (16) is configured to control said ellipticity rate by means of the load impedance of the sensor, said load impedance of the sensor being configured to directly vary the antenna mode of the antenna-sensor (16), the value of said load impedance of the sensor (18) being configured to be adjusted by taking into account the structure mode of the antenna-sensor (16), said structure mode being determined by a characterization of the associated backscattered electromagnetic field.

10. Measuring device (10) according to claim 8, wherein said antenna-sensor (16) consists of a sensor (18) integrated into a target antenna (20) having at least two excitation ports, said antenna-sensor (16) being configured to control said ellipticity rate, by means of the load impedance of the sensor (18), the load impedance of the sensor (18) being configured to directly vary the orthogonal components of the antenna mode of the antenna-sensor (16), the value of the load impedance of the sensor (18) being configured to be adjusted by taking into account the structure mode of the antenna-sensor (16), said structure mode being determined by a characterization of the associated backscattered electromagnetic field.

11. Method (40) for determining the range of variation of the load impedance of the sensor of the antenna-sensor of the measuring device according to any of the preceding claims, and for determining the incidence polarization of the transceiver unit (11) during wave transmission, the method comprising the following steps, per predetermined frequency band:

- characterization (42) of the backscattering model of said antenna-sensor for a predetermined direction of incidence and a predetermined direction of scattering and for a predetermined plurality of polarizations of the incident plane wave transmitted by the transceiver unit (11),
- first determination (44) of the reactance and/or resistance of the load impedance of the sensor of the antenna-sensor associated with a first value of predetermined amplitude and/or ellipticity rate of the backscattered field associated with said backscattering model as a function of the incident plane wave polarization,
- second determination (46) of the reactance and/or resistance of the load impedance of the sensor associated with a second predetermined amplitude and/or ellipticity rate value of the backscattered field associated with said backscattering model as a function of the incident plane wave polarization,
- third determination (48) of the incidence polarization from the first determination and from the second determination.

**12.** Determination method (40) according to claim 11, wherein:

- the characterization step is implemented for a predetermined plurality of linear polarizations of incident plane wave transmitted by the transceiver unit (11);
- the first determination step corresponds to the determination of the reactance of the load impedance of the sensor of the antenna-sensor maximizing the value of the backscattered field associated with said backscattering model; and
- the third determination step corresponds to the determination of the incidence polarization corresponding both to a predetermined load and to the reactance of the load impedance of the sensor of the antenna-sensor maximizing the value of the backscattered field associated with said backscattering model, and obtaining the maximum resistance value of the sensor load impedance associated with a circular polarization backscattering, said range of variation of the load impedance of the antenna-sensor corresponding to a range of variation of the resistance of the load impedance of the sensor between the zero value, associated with a maximum ellipticity rate, and said maximum resistance value, associated with a zero value of the ellipticity rate, for a constant reactance value equal to the reactance of the load impedance of the sensor of the antenna-sensor, maximizing the value of the backscattered field associated with said backscattering model.

**13.** Determination method (40) according to claim 11 or 12, wherein said step of characterization (42) of backscattering model of said antenna-sensor comprises:

- the local excitation (50) of the antenna of said antenna-sensor and:

  + the measurement (52) of the orthogonal components of the radiated field thereof;
  + depending on the number of excitation port(s) of said target antenna, the calculation (54) of at least one impedance at an interface between said antenna and a load impedance of said antenna, of predetermined value;

- the determination (56) of the structure mode of the antenna of said antenna-sensor by loading said antenna by a short circuit and illuminating by a predetermined incident wave.

EP 4 184 125 B1

FIG.1

## FIG.2

EP 4 184 125 B1

EP 4 184 125 B1

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010136388 A1
- CN 111797963 A

- WO 2010136388 A

**Littérature non-brevet citée dans la description**

- **NUMAN A.B. et al.** Wide Field of View Retrodirective Millimeter Wave Antenna Array With Pulse Modulation and Orthogonal Polarization States. *IEEE Access,* 2020, vol. 8
- **CHEN Y. et al.** Circularly Polarized UHF RFID Tag Antenna for Wireless Sensing of Complex Permittivity of Liquids. *IEEE Sensors Journal,* 21 Octobre 2021

- Polarization-reconfigurable slot loop antenna based on a novel varactor-loaded feeding network. **YANG SHIH-AN et al.** 2016 IEEE International Symposium on Radio-Frequency Intégration Technology (RFIT) 2016. IEEE
- **JEANTY R. et al.** A low-profile polarization-reconfigurable cavity antenna based on partially reflective surface. *2017 IEEE International Symposium on Radio-Frequency Intégration Technology (RFIT),* 2017